(19) **Europäisches Patentamt / European Patent Office / Office européen des brevets**

(11) **EP 3 675 977 B1**

(12) **EUROPEAN PATENT SPECIFICATION**

(45) Date of publication and mention
of the grant of the patent:
**10.11.2021 Bulletin 2021/45**

(21) Application number: **17768530.2**

(22) Date of filing: **07.09.2017**

(51) Int Cl.:
*B01D 5/00* *(2006.01)*       *C02F 1/10* *(2006.01)*
*C02F 1/14* *(2006.01)*       *E03B 3/28* *(2006.01)*

(86) International application number:
**PCT/NL2017/050589**

(87) International publication number:
**WO 2019/045559 (07.03.2019 Gazette 2019/10)**

(54) **METHOD AND DEVICE FOR CONDENSING A VAPOR**

VERFAHREN UND VORRICHTUNG ZUM KONDENSIEREN EINES DAMPFES

PROCÉDÉ ET DISPOSITIF DE CONDENSATION D'UNE VAPEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2017 NL 2019459**

(43) Date of publication of application:
**08.07.2020 Bulletin 2020/28**

(73) Proprietor: **SunGlacier Technologies B.V.
2983 GS Ridderkerk (NL)**

(72) Inventors:
• **VERHEGGEN, Albert Hubertus Carolus Maria
2582 VZ Den Haag (NL)**
• **VAN GELOVEN, Petrus Albertus Adrianus
3119 MV Schiedam (NL)**

(74) Representative: **Nederlandsch Octrooibureau
P.O. Box 29720
2502 LS The Hague (NL)**

(56) References cited:
BE-A5- 1 009 886       NL-C- 1 040 351
US-A- 5 207 928

**Description**

The invention relates to a method for condensing a vapor, comprising providing the vapor having a first dew point, providing a condenser liquid, and cooling the condenser liquid to below or near the first dew point, bringing the vapor and the condenser liquid into contact with each other, and thereby cooling the vapor to below or near the first dew point, and causing the condenser liquid to flow and/or fall, wherein the vapor at least partially condenses into a condensate which is taken up by the condenser liquid.

Such a method is known per se, see e.g. BE1009886A5, for instance from commercially available condensers with liquid cooling systems. Such a method however is not at all times applicable, especially when the vapor is comprised of a mixture of vapors in a low concentration, or when temperatures are high. Furthermore such a method may have the disadvantage that the condensate may need to be separated from the condenser liquid.

The invention therefore has the object to improve the methods known from the prior art by at least partly solving one of the problems indicated above, or by improving the efficiency of the method.

The object is achieved by a method according to claim 1, wherein the condenser liquid is essentially the same fluid or compound as the vapor.

This method may have as an advantage that there is no need to separate the condenser liquid from the condensate. Additionally or alternatively this method may have the advantage of an improved efficiency, because the vapor may more easily condense when coming into contact with a condenser liquid of the same fluid or compound. The condensate may be bound by the condenser liquid by cohesive attraction, thus effectively "trapping" the condensate and preventing reevaporation. Such a method may be applicable to vapors of low concentration in a vapor mixture and/or may be applicable even when the vapor is of relatively high temperature. Additionally or alternatively such a method may have the advantage of providing cooled air. The cooled air may be provided to cool for instance buildings or rooms, or specifically greenhouses.

The term "vapor" throughout this application may mean a fluid or compound in a gaseous state, possibly below its critical temperature. Such a vapor may or may not contain liquid droplets of the same type of fluid or compound.

In an embodiment of the method according to the invention, the vapor is ambient air and the condensate is water.

Such a method is particularly useful in arid environments with high average temperatures, since the need for water in such areas is often high. The method and the device may therefore provide water which can be used as a source for potable drinking water, for irrigation or as industrial water, etc. In particular, the method may be used as an alternative for desalination in areas where there is no access to sea water.

In particular the method further comprises allowing non-condensed vapor to freely flow away.

The method further comprises collecting the condenser liquid with the condensate taken up therein, and reusing at least part of the condenser liquid with the condensate taken up therein for cooling vapor.

The vapor may be moisture in ambient air, and the condenser liquid may be water, which may be treated to become potable drinking water. Alternatively the method may be used to provide water for irrigation, agriculture, horticulture or for use in industrial processes.

Because the condenser liquid with the condensate taken up therein is reused, the condenser liquid being cooled, and being used to cool the vapor, may contain condensate. Throughout this application therefore, condenser liquid may be interpreted as already containing previously condensate previously condensate vapor as a condensate.

The method further comprises collecting the condenser liquid with the condensate taken up therein, and cooling the condenser liquid with the condensate taken up therein to below or near the first dew point. In this way evaporation of the condenser liquid is prevented to a large extent.

In the method according to the invention, the flowing and/or falling of the condenser liquid leads to a movement of the condenser liquid, which causes a parallel flow of the vapor, such that the vapor is being supplied, cooled by contact with the condenser liquid, and wherein non-condensed vapor is being discharged.

Such a method may have the advantage that no driving means are necessary to supply or discharge the vapor. Additionally or alternatively such a method may have the advantage that heat exchange between the condenser liquid and the vapor is enhanced and/or that heat exchange between the condenser liquid and the vapor takes place over a time period which is desirable, long enough and/or optimal.

Such a method may in particular not involve any forced movement of the vapor, so that the vapor is solely moved by the movement of the condenser liquid.

In the method according to the invention, the vapor and the condenser liquid are brought into contact with each other within a housing, the vapor is supplied via a vapor supply opening in the housing, the non-condensed vapor is discharged via a vapor discharge opening, and the condenser liquid with the condensate taken up therein is collected.

Such a method may have the advantage that condensation takes place in a protected environment, which may or may not be cooled and/or isolated. In particular such a method may have the advantage that evaporation of the condenser liquid is at least to some extent prevented. Moreover such a method may have the advantage that the condensate remains within the housing so that it is available either for reuse, or as a stock of potable drinking water. Additionally or alternatively such a method may have the advantage of only cooling vapor to be condensed, so that no energy is wasted on cooling vapor that can get away without condensing.

In yet another embodiment of the method according to the invention, the condenser liquid is supplied by first supply means, which are provided closer to the vapor supply opening than to the vapor discharge opening.

Such a method may have the advantage that vapor is more effectively drawn in by the movement of the condenser liquid.

In yet another embodiment of the method according to the invention, the vapor supply opening is provided downstream from the supply means as seen in a direction of movement of the condenser liquid.

Such a method may have the advantage that vapor is more effectively drawn in by the movement of the condenser liquid. Additionally or alternatively such a method may have the advantage that a large part of the supplied vapor is cooled effectively.

In yet another embodiment of the method according to the invention, the method comprises causing the condenser liquid to fall past the vapor supply opening and/or the vapor discharge opening.

Such a method may have the advantage of more effectively causing the vapor to be sucked in via the vapor supply opening and being discharged via the vapor discharge opening. Additionally or alternatively such a method may not require a high pressure of the condenser fluid at the supply means, and therefore may be more energy efficient.

In yet another embodiment of the method according to the invention, the method further comprises atomizing the condenser liquid.

Such a method may have the advantage that a large surface area for interaction between the condenser liquid and the vapor is created, and/or that the contact time between the condenser liquid and the vapor is increased and/or optimized.

Atomizing may herein mean dispensing the condenser liquid in such fashion that many small droplets are dispersed. The resulting condenser liquid may be in an aerosol state.

In the method according to the invention, the method further comprises cooling the non-condensed vapor which has a second dew point after it has been in contact with the condenser liquid, to below the second dew point.

Such a method may provide a larger amount of condensate. More specifically such a method may more efficiently provide a larger amount of condensate than if the vapor were cooled to the same temperature below the second dew point in one step.

Cooling the vapor to below the second dew point involves cooling the vapor using second cooling means, namely a Peltier element and possibly a funnel-shaped cooling surface.

The method may further comprise guiding the non-condensed vapor to Peltier elements.

In yet another embodiment of the method according to the invention, the method further comprises generating electrical energy, preferably by converting solar energy, for cooling the condenser liquid and/or for causing the flow and/or fall the condenser liquid and/or for cooling the vapor.

Such a method may have the advantage of being particularly useful in remote areas, especially remote areas which are arid and hot such as desert-like areas. Additionally or alternatively such a method may require no fossil fuels.

In yet another embodiment of the method according to the invention, the method further comprises storing at least part of the generated electrical energy by cooling a cold buffer when enough electrical energy can be produced, and cooling the condenser liquid and/or the vapor by means of the cold buffer when not enough electrical energy can be produced.

By temporarily storing excess cold and using this stored cold during periods when no solar energy can be harvested, e.g. during the night, there is no need for generating energy by using fossil fuels. Consequently, this embodiment leads to an extremely efficient method having a zero emission footprint.

In addition, part of the generated electrical energy may be stored in a small battery for supplying power to electrical components, like e.g. electrical pumps for causing the flow and/or fall the condenser liquid at times when there is not enough solar energy..

In the invention, the method further comprises precooling the vapor by bringing the vapor into heat exchanging contact with the non-condensed vapor which has been in contact with the condenser liquid and which has been cooled to below the second dew point.

Such a method may have the advantage of being more energy efficient. Additionally or alternatively such a method may have the advantage of being able to cool the vapor down faster and/or further, thereby condensing more liquid.

In a further embodiment of the method of the invention, the non-condensed vapor which has been in contact with the condenser liquid - and which is cooled to below the second dew point - may be brought into heat exchanging contact with air in a space for cooling thereof. In this way the cold that is present in the non-condensed vapor can be advantageously used for cooling purposes, thereby further increasing the efficiency of the process.

The invention also relates to a device, according to claim 8, for condensing a vapor having a first dew point.

A conventional condenser on the basis of a liquid cooling system may comprise first cooling means for cooling a condenser liquid to below or near the first dew point, first supply means for causing the condenser liquid to flow or fall such that the condenser liquid comes into contact with the vapor, whereby the vapor is cooled to below or near the first dew point, and a pump for pumping the condenser liquid to the first supply means, wherein the vapor at least partially condenses into a condensate which is taken up by the condenser liquid.

The condensation device according to the present invention is distinguished from conventional devices by the fact that the condenser liquid is essentially of the same fluid or compound as the vapor.

Such a device may have the advantage of being able to conduct the method according to the invention. More specifically this device may have as an advantage that there is no need to separate the condenser liquid from the condensate. Additionally or alternatively this device may have the advantage of an improved efficiency, because the vapor may more easily condense when coming into contact with a condenser liquid of the same fluid and being subject to cohesive attraction. Such a device may be applicable to vapors of low concentration in a vapor mixture and/or may be applicable even when the vapor is of relatively high temperature.

The device may be provided with recirculating means for recirculating at least part of the condenser liquid for cooling the vapor.

The device may be provided with a reservoir for collecting the condenser liquid. The reservoir or condenser liquid contained therein may be cooled to below or near the first dew point by third cooling means.

In another embodiment of the device according to the invention the device further comprises liquid discharge means exterior to the housing, for discharging condenser liquid with the condensate taken up therein exterior to the housing.

Such a device may have the advantage of being able to easily provide the condensate, for instance water. Possibly the device may provide the condensate in a treated form, such as potable drinking water.

Other preferred embodiments of the device according to the invention are described in dependent claims 9-15.

The invention will now be elucidated by way of a number of exemplary embodiments, with reference being made to the accompanying drawings, in which like elements are identified by the same reference numerals, and in which:

Fig. 1 is a flow diagram illustrating the main steps of an embodiment of the method of the invention;

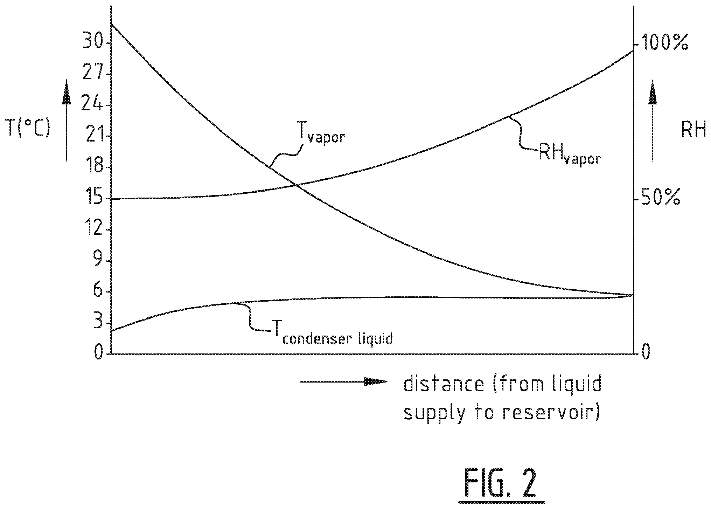

Fig. 2 is a graph illustrating the evolution of the temperatures and relative humidity of the vapor and the condenser liquid;
Fig. 3 is a schematic representation of an embodiment of a vapor condensing device not according to the invention;
Fig. 4 is a schematic representation of an embodiment of the inventive vapor condensing device;
Fig. 5 is a schematic representation of yet another embodiment, not according to the invention, of the vapor condensing device;
Fig. 6 is a systematic overview of the components of the vapor condensing device
Fig. 7 is a schematic graph showing the relationship between available solar energy and energy required to maintain the process; and

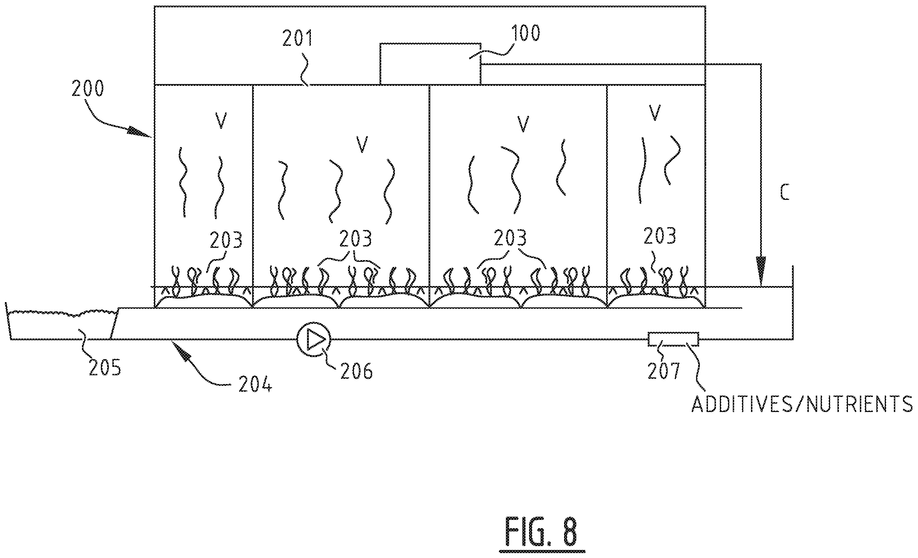

Fig. 8 is a schematic view of a greenhouse in which a device is used for condensing and recirculating vapor.

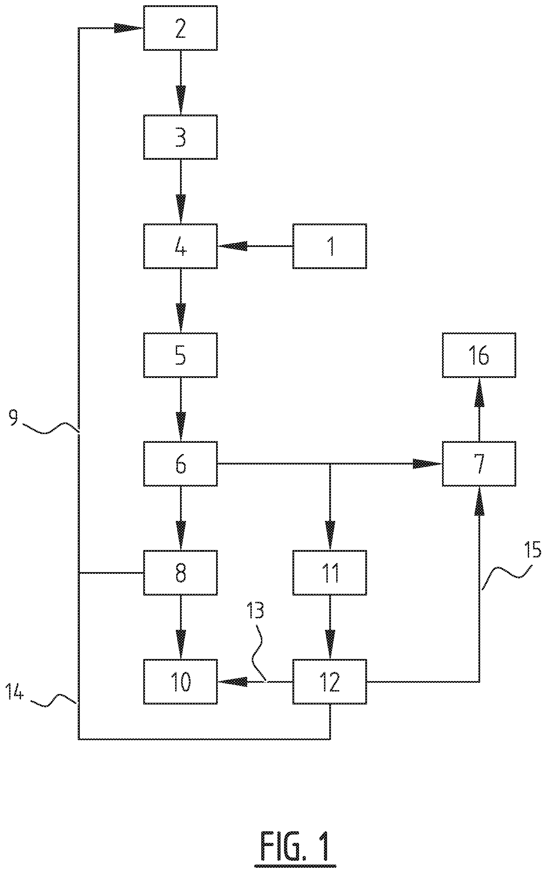

A method 100 for condensing a vapor V (fig. 1) comprises the steps of providing the vapor V having a first dew point (step 1), providing a condenser liquid CL (step 2), and cooling the condenser liquid CL to below or near the first dew point (step 3). In accordance with the invention, the condenser liquid CL may be substantially the same fluid or compound as the vapor V. For instance, the vapor V may be ambient air containing minute amounts of water, and the condenser liquid CL may be water. The vapor V may be supplied at a first temperature $T1$, e.g. $T1 = 30°C$. The vapor V that is supplied may have a first relative humidity $RH1$, e.g. $RH1 = 50\%$. Under those circumstances the dew point of the vapor may be calculated as $Td = 18.4°C$, which is defined as the first dew point. The condenser liquid CL may be cooled to a temperature of e.g. $T2 = 2°C$, which is well below the first dew point of the vapor V.

The method further comprises bringing the vapor V and the condenser liquid CL into contact with each other (step 4) whereby the vapor V is cooled to below or near the first dew point. Since the mass of the condenser liquid CL is far greater than that of the vapor V, the vapor V will be cooled much more than the condenser liquid CL will be heated.

In principle, the condenser liquid CL and the vapor V could be held substantially stationary when they are brought into contact, e.g. if the condenser liquid CL would be held in a basin or tank. However, a more efficient process of cooling and condensation is achieved when the condenser liquid is moved or transported along the vapor or the other way around. To that end a further step (step 5) involves causing the condenser liquid CL to flow and/or fall. The flowing or falling condenser liquid CL will drag the vapor V along in parallel flow, thus resulting in a relatively long period of contact and a very effective heat transfer. During the heat exchanging contact the vapor V at least partially condenses into a condensate C which is taken up by the condenser liquid CL by cohesion. Instead of parallel flow, the heat exchanging contact between the condenser liquid CL and the vapor V could also be achieved in a crossflow or a counterflow.

At the end of the period of heat exchanging contact the temperature $T3$ of the vapor V will have fallen to its first dew point or below. In this example the vapor temperature may be around $T3=6°C$. At the same time the relative humidity of the vapor V may have risen to approximately $RH2=99\%$.

In a subsequent step (step 6) any non-condensed vapor NCV is separated from the condenser liquid CL and condensate C, and is discharged, e.g. into the ambient air (step 7). This non-condensed vapor NCV may be subject to various subsequent processes, as will be described below.

In a next step (step 8) a part of the combined flow of condenser liquid CL and condensate C is separated in order to be recirculated (arrow 9). This part of the flow will again be supplied as condenser liquid CL in step 2 and will have to be cooled again in step 3, since it has been heated somewhat during condensation of the vapor V. At the start of the process, the volume of liquid that is circulated may be larger than the volume of condenser liquid CL that was initially supplied, in order to create a sufficiently large body of condenser liquid CL. However, once the process reaches a steady state, the liquid volume that is recirculated will be substantially constant and substantially equal to the volume of condenser liquid CL that enters the process.

The remainder of the flow, the volume of which may equal the amount of condensate C, may be collected and drawn off (step 10). The liquid which is collected and drawn off in this step is the yield of the process. When the vapor V is ambient air and the condenser liquid CL is water, the condensate will also be water, e.g. potable water or water to be used for other purposes.

The non-condensed vapor NCV with its low temperature and its high relative humidity may be used in several ways to improve the yield and efficiency of the process.

The high-humidity non-condensed vapor has a second dew point, which is relatively close to its temperature at the end of the (primary) condensation process. Consequently, the non-condensed vapor NCV can be condensed by subjecting it to a relatively modest further cooling process, which does not require a large amount of energy. In step 11 the non-condensed vapor is cooled to a temperature T4 below the second dew point, thus releasing additional liquid from the non-condensed vapor NCV in the shape of secondary condensate SC. This secondary condensate SC is separated from the remaining vapor in step 12. The secondary condensate SC may either be collected and then drawn off (arrow 13) or it may be added to the recirculating flow (arrow 14). The remaining non-condensed vapor NCV may again be discharged, e.g. into the ambient air (arrow 15).

The non-condensed vapor NCV that results from the separating step 6 and separating step 12 has a temperature (somewhere between T3 and T4) that is well below the ambient temperature. Consequently, this non-condensed vapor NCV may be used as a cooling medium. In an optional step 16 the non-condensed vapor NCV may either be vented directly into a space in order to cool that space, or it may be brought into heat exchanging contact with a cooling fluid which will cool the space.

It should be noted that the method of the invention requires a supply of condenser liquid to start. Alternatively, the method may start by initially condensing vapor on e.g. a cold surface of a conventional condenser, and then switching to the use of condenser liquid as soon as a sufficient amount of condensate has been collected.

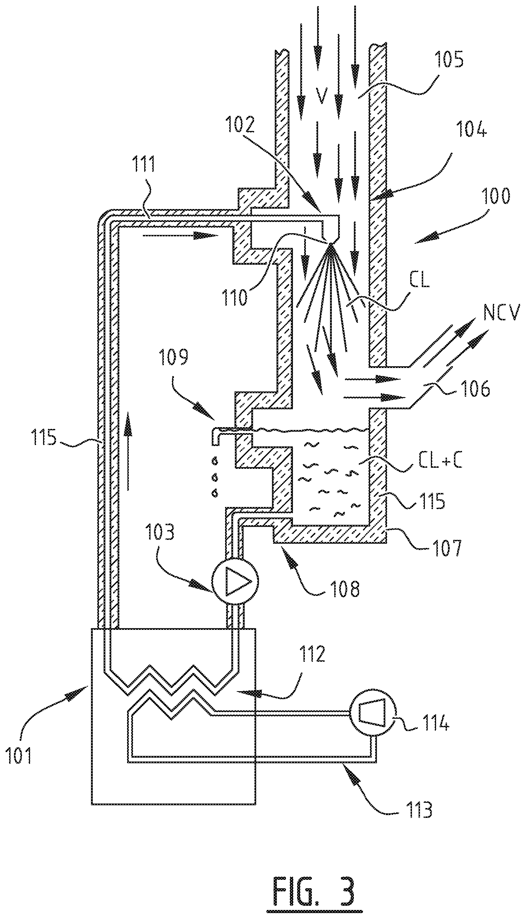

Fig. 3 shows a first embodiment of a device 100 for condensing a vapor V having a first dew point. The condensing device 100 comprises first cooling means 101 for cooling a condenser liquid CL to below or near the first dew point, first supply means 102 for causing the condenser liquid CL to flow or fall such that the condenser liquid CL comes into contact with the vapor V, whereby the vapor V is cooled to below or near the first dew point, and a pump 103 for pumping the condenser liquid CL to the first supply means 101.

In the illustrated embodiment the first supply means 102 are arranged in a housing 104 which is completely closed off from the surrounding atmosphere, with the exception of a vapor supply opening 105 and a vapor discharge opening 106. Vapor V may be drawn into the vapor supply opening 105 by a pressure reduction in the housing 104 as a result of the condenser liquid flowing or falling from the first supply means 101. This vapor V is then carried along in parallel flow with the condenser liquid CL flowing or falling through the housing 104, and is cooled by the condenser liquid. As a result, part of the vapor V is condensed and this condensate C taken up by the condenser liquid CL. Vapor NCV that is not condensed leaves the housing 104 through the vapor discharge opening 106. Since the vapor V is sucked in and carried along by the condenser liquid, there is no need for a fan or other type of powered apparatus for moving the vapor V through the condensing device 100. Nevertheless, it should be noted that the vapor supply and discharge openings 105, 106 could be arranged at other locations in the housing, e.g. at the same height on opposite sides of the housing 104 to create a flow of vapor V across the flow of condenser liquid.

In the illustrated embodiment the housing 104 further comprises a reservoir 107 for collecting the condenser liquid CL and the condensate C. The reservoir 107 is provided with recirculating means 108 for recirculating at least part of the condenser liquid and condensate to the first supply means 102. In this embodiment the recirculating means 108 includes an outlet leading to the pump 103. The reservoir 107 further includes liquid discharge means 109 for discharging part of the condenser liquid and condensate, which may serve as a source of potable water. The liquid discharge means 109 also includes an outlet.

In this embodiment the first supply means 102 is arranged between the vapor supply opening 105 and the vapor discharge opening 106 such that the condenser liquid flows or falls in the direction from the vapor supply opening 105 to the vapor discharge opening 106. At least the part of the housing 104 between the first supply means 102 and the reservoir 107 is shown to be substantially vertical in this embodiment, so that the flow of condenser liquid from the first supply means 102 to the reservoir 107 and the recirculating means 108 is assisted by gravity, more or less like a waterfall or a shower. This part of the housing 104. which defines a condensation path where the condenser liquid CL is in heat exchanging contact with the vapor V, may be tubular and may have any desired cross sectional shape, although a circular cross section may be preferred from an aerodynamic and hydrodynamic point of view.

The first supply means 102 may be arranged for atomizing the condenser liquid, so that the contact surface of the condenser liquid CL is increased. To this end the first supply means 102 may include a sprayer head 110. The sprayer head 110 is arranged at the end of a pipe 111 which extends into the interior of the housing 104, and is directed towards the vapor discharge opening 106. In this way a spray of condenser liquid is formed which is evenly distributed over the entire cross section of the housing and which optimizes contact between the condenser liquid CL and the vapor V.

The pipe 111 carrying the sprayer head 110 is part of both the first supply means 102 and the recirculating means 108. It leads from the outlet of the reservoir 107 to the pump 103 and from there to the first cooling means 101. And finally, the pipe 111 leads from the first cooling means to the sprayer head 110. Flow of condenser liquid through the pipe 111 is generated by the pump 103, which may be electrically driven.

The first cooling means 101 comprise a heat exchanger 112 in which the condenser liquid CL flowing through the pipe 111 is brought into heat exchanging contact with a refrigerant flowing through a refrigeration circuit 113. The heat exchanger 112 serves as evaporator for the refrigeration circuit 113, which further includes a compressor 114, a condenser (not shown) and an expansion valve (not shown). The condenser of the refrigeration circuit 113 is in heat exchanging contact with a cold buffer, the function of which will be explained below.

The housing 104 and pipe 111 are surrounded by isolation material 115 in order to prevent the temperature within the housing 104 and pipe 111 to rise due to higher ambient temperatures. And although not shown in this embodiment, the reservoir 107 may be provided with additional cooling means, which may be connected with the refrigeration circuit 113 of the first cooling means. These measures serve to prevent evaporation of the condenser liquid CL and the condensate C circulating in the device 100.

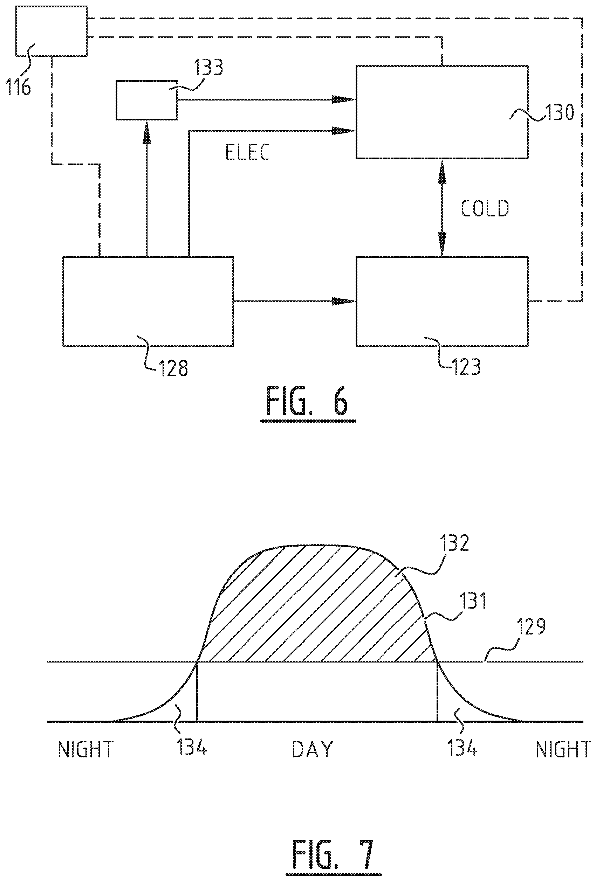

Operation of the first cooling means 101, the first supply means 102, the pump 103, the recirculation means 107 and the liquid discharge means 109 is controlled by a controller 116 (Fig. 6). Power for operating the first cooling means 101, the pump 103 and the controller 116 may be provided by any suitable power supply. In order to optimize the economics of the condensation process and minimize emissions, power is preferably provided by a sustainable power source, like e.g. solar energy. To this end the cooling means 101, the pump 103 and the controller 116 may be connected to one or more solar panels 128.

The length and cross section of the condensation path, the amount of condenser liquid and the temperature to which the condenser liquid is cooled are all parameters which can be selected as a function of the temperature and relative humidity of the vapor, the desired yield of condensate and the available amount of energy.

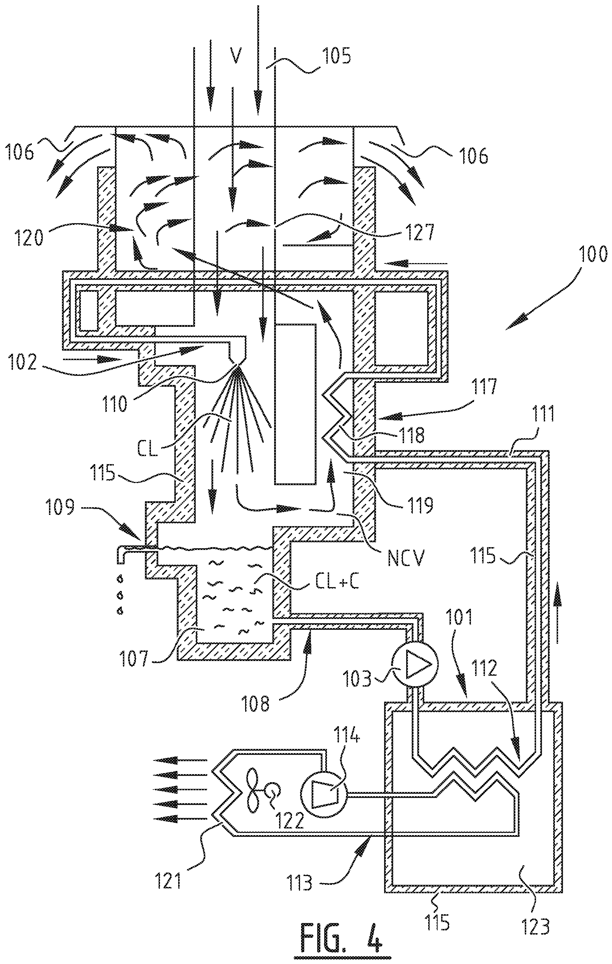

Fig. 4 shows the inventive embodiment of the vapor condensing device 100, in which additional condensate is extracted from the non-condensed vapor NCV that has a second dew point. In this embodiment, the core of the device 100 is essentially the same as that of the first embodiment, and includes the first supply means 102, the first cooling means 101, the pump 103 and the reservoir 107 with the recirculating means 108 and the liquid discharge means 109.

This second embodiment differs from the first embodiment in that after passing through the first cooling means 101, the condenser liquid is not transferred to the first supply means 102 directly, but is first guided towards second cooling means 117. These second cooling means 117 include a heat exchanger 118 that is arranged in a duct 119 which runs from the tubular contact part of the device 100 towards the vapor discharge opening 106. By further cooling the non-condensed vapor NCV flowing through the duct 119, which has a temperature that is already very close tot its second dew point, an additional amount of a vapor may be condensed and this socalled secondary condensate flows towards the reservoir 107. The second cooling means 117 includes a Peltier element, which is robust due to its lack of moving parts and which is therefore well suited for application in remote areas.

After having been further cooled in the second cooling means 117, the non-condensed vapor is guided towards a further heat exchanger or pre-cooler 120 where the low temperature non-condensed vapor NCV is brought into heat exchanging contact with the relatively warm vapor V entering the device 100. In this embodiment this pre-cooler 120 has the shape of a chamber surrounding a duct 127 through which the fresh vapor V is drawn in and transported from the vapor supply opening 105 towards the first supply means 102 and the spray of condenser liquid CL.

It is preferred that the vapor V be pre-cooled to a temperature that is still higher than its dew point, in order to avoid condensation in the inlet. By pre-cooling the vapor a larger flow of vapor may be processed in the same apparatus, thus increasing the yield.

In this embodiment the first cooling means 101 is shown in some more detail. In particular, Fig. 4 shows the evaporator 121 and the fan 122, as well as the cold buffer 123, which is shown to be provided with isolation 115, just like the other parts of the device 100.

The non-condensed vapor NCV leaving the vapor discharge opening 106 is substantially cooler than the ambient air. This applies both to the first and second embodiments discussed above. Therefore, this non-condensed vapor NCV can be used for cooling purposes. To this end the non-condensed vapor may be guided to a room and used as ventilation air for direct cooling of the room. Alternatively, the non-condensed vapor NCV could be guided through a further heat exchanger to cool a fluid (liquid or gas) which will in turn be used to cool the room. In this way a part of the energy consumed by the device 100 is recovered.

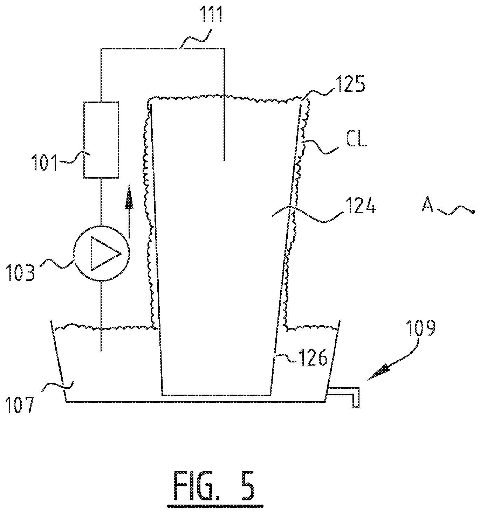

In yet another embodiment of the vapor condensing device 100 (Fig. 5) the first supply means 102 are not arranged in a housing. In this embodiment the first supply means 102 include a container 124 that is open at the top, and in which the pipe 111 debouches. The container 124 is surrounded by the reservoir 107. The container 124 is filled to its upper edge 125 with condenser liquid CL, such that any new supply of liquid through the pipe 111 leads to the container 124 overflowing. The condenser liquid which flows over the edge 125 runs down the outer wall 126 of the container 124 into the reservoir 107. Like in the other embodiments, the condenser liquid has been cooled to a temperature below or near the dew point of the vapor which is to be condensed, in this embodiment the ambient air A.

While the condenser liquid CL flows along the outside 126 of the container 124, it comes into contact with the ambient air A, which is cooled by the cold condenser liquid to a temperature near or below its dew point. As a result, part of the ambient air will condense and this condensate will be captured in the condenser liquid and will flow into the reservoir 107. From there the liquid will be pumped to the cooling means 101 by the pump 103. Here again, the reservoir may include liquid discharge means 109 to withdraw a part of the liquid - which corresponds to the amount of condensate generated by the condensation process - from the device 100 to be used as clean water.

Fig. 6 shows the general arrangement of the entire vapor condensing device 100. The device 100 may be broken down into an actual liquid condensing part 130, the cold buffer 123, an energy generating part 128 and the controller 116. The controller 116 may be any suitable controller, e.g. a PLC, a PC, a laptop computer or any other programmable electronic device.

The actual liquid condensing part 130 is that part of the device 100 in which the condenser liquid circulates and is brought into contact with the vapor. This part 130 includes i.a. the first cooling means 101, the first supply means 102, the pump 103, the reservoir 107, the recirculating means 108 and the liquid discharge means 109.

The cold buffer 123 is connected with the cooling means 101 of the device and serves to store excess cold that is generated by the cooling means 101. Such excess cold may be generated by the refrigeration circuit 113, which is dimensioned such that it is "oversized" for the first cooling means 101. In other words, the refrigeration circuit 113 is arranged to generate more cold than is needed for cooling the condenser liquid to a temperature below or near the first dew point of the vapor to be condensed. This is particularly useful when the energy generator 128 is a sustainable energy generator like e.g. a solar energy converter having one or more PV panels.

Since the availability of solar energy varies over time, there will be periods when there is an abundance of solar energy and periods when solar energy is in short supply. At least during nighttime the supply of solar energy is zero in most parts of the world. Therefore, storage facilities for storing excess solar energy harvested during the day in order to ensure continuous energy supply during dark periods or periods of insufficient solar intensity are necessary in order to avoid the use of fossil fuels.

In an embodiment of the invention the excess electrical energy provided by the solar energy converter during the day is used to generate excess cold, which is stored in the cold buffer 123. This is shown in Fig. 7, where the line 129 represents the energy that is needed for operating the device 100, while the graph 131 represents the electrical energy generated by the solar panels 128. It should be noted that although line 129 is shown to be horizontal, indicating a constant energy demand, it will actually be somewhat curved since the condensation process will require more energy during the day, when ambient temperatures are higher. The hatched area 132 above the horizontal line 129 represents the excess electrical energy that is converted into cold and stored in the cold buffer. This stored cold may be used by the cooling means 101 to cool the condenser liquid CL during periods when the refrigeration circuit 113 is not operative for lack of electrical energy. It should be noted that in addition to the cold buffer 123 the device 100 may also include a small battery 133 for storing electrical energy that may be used for driving e.g. the pump 103 and powering the controller 116. This battery 133 may be charged e.g. whenever the solar energy does not reach the level required for operating the device 100, as indicated by the areas 134.

Although the device 100 has thus far been described as a device for harvesting water from ambient air, in particular potable water in areas where such water is scarce, it may also be used in other situations.

For instance, in greenhouses rainwater is collected and is used to water plants. The water that is supplied to the plants may be provided with nutrients and/or pesticides in order to promote plant growth and prevent plant diseases. After use, the remaining water is recycled, which requires filtering the water to remove remnants of the additives.

In an embodiment of the invention the vapor condensing device 100 is arranged in a greenhouse 200, e.g. mounted on the frame 201 of the greenhouse 200 near its roof 202. The greenhouse 200 includes beds of plants 203 which are watered by an irrigation system 204. The irrigation system 204 draws rainwater from a collection basin 205 by means of a pump 206. Additives like nutrients and/or pesticides are added to the water by an addition unit 207 before it is supplied to the plants. The vapor condensing device 100 catches the vapor V that is evaporated from the plants 203 and turns it into condensate C. This condensate C includes pure water, without the additives, which can be returned to the irrigation system 204 and can be reused without requiring further processing. Moreover, the non-condensed vapor NCV that is discharged from the device 100 can be used to cool the greenhouse 200. In this way both the cost of irrigation and the cost of cooling in a greenhouse is reduced.

The method of condensing liquid in accordance with the invention is far more efficient than conventional techniques used in commercially available air dryers, as will be shown by a comparative calculation below.

*Comparison 1*

As an example of a conventional air dryer for professional use a FRAL Comfort 26, made by FRAL SRL of I-35010 Carmignano di Brenta, Padua, Italy (www.fral.it) was considered. According to its specifications, this air dryer has an average energy consumption of 330 W, an airflow of 300 m$^3$/h and a maximum yield of 26 liters of water per day at an ambient temperature of 32 °C and a relative humidity (RH) of 90 percent.

Under these circumstances the water content in air (vapor) is 35.86 g/m$^3$. The FRAL Comfort 26 provides 26 / 24 = 1.08 liters of condensate per hour. Considering the airflow of 300 m$^3$/h, this equates to 1080ml / 300 = 3.6 ml/m$^3$ of air. And considering the energy consumption of 330 W, the energy related yield is 1080 / 330 = 3.27 ml/Wh.

For air at an ambient temperature of 32 °C and a relative humidity of 90 percent the dew point temperature is 30.2 °C. If in the method of the invention the vapor is cooled to a temperature at discharge of 15 °C and a RH of 99.9 %, then the non-condensed vapor NCV that is discharged has a water content of 13.79 g/m$^3$. Consequently, an amount of 22.07 g/m$^3$ has been condensed. The thermal energy required for cooling 1 m$^3$ of air from 32 °C to 15 °C in one hour can be calculated as:

$$P = m \times c \times \Delta t \ ,$$

wherein m represents the mass (for 1 m$^3$ of air: m = 1.29 kg), c the specific heat (for air: c = 1.000 kJ/kg.K) and $\Delta t$ the temperature differential (here: $\Delta t$ = 17 °). Substituting these values, the thermal energy can be calculated as P = 7.3 W. When using a compressor having R134a as refrigerant an average COP (coefficient of performance) of 2.2 may be achieved. Thus, generating 7.3 W of thermal energy needed for cooling 1 m$^3$ of air requires 7.3 / 2.2 = 3.32 Wh of electrical energy.

In order to generate 1080 ml of water (condensate) an amount of 1080 / 22.07 = 48.94 m$^3$ of air has to be cooled. This requires 48.94 x 3.32 = 162 Wh of electrical energy, which is 49 percent of the energy consumed by the FRAL Comfort 26 for condensing the same amount of water.

*Comparison 2*

For the same air dryer the specifications mention a yield of 19 liters per day at an ambient temperature of 30 °C and a relative humidity of 80 percent. Under these the water content in air (vapor) is 35.86 g/m$^3$. The yield is 19 / 24 = 0.79 liters of condensate per hour, which equates to 790 / 300 = 2.63 ml/m$^3$ of air and an energy related yield of 790 / 330 = 2.39 ml/Wh.

For air at an ambient temperature of 30 °C and an RH of 80 % the dew point temperature is 26.2 °C. Using the method of the invention the vapor is again cooled to a temperature at discharge of 15 °C and a RH of 99.9 %, where the non-condensed vapor NCV has a water content of 13.79 g/m$^3$. Consequently, an amount of 14.34 g/m$^3$ has been condensed. Using the formula defined above, the thermal energy required for cooling 1 m$^3$ of air from 30 °C to 15 °C in one hour can be calculated as P = 6.5 W. And using the same compressor as in the previous example, this means that the required electrical energy is 6.5 / 2.2 = 2.95 Wh.

In order to generate 790 ml of water (condensate) an amount of 790 / 14.34 = 55.09 m$^3$ of air has to be cooled. This requires 55.09 x 2.95 = 163 Wh of electrical energy, which is again 49 percent of the energy consumed by the FRAL Comfort 26 for condensing the same amount of water.

Without wishing to be bound by theory, it is assumed that the superior efficiency of the method and device of the present invention is due to the fact that all vapor is cooled to a temperature below its dew point. Under these circumstances the vapor cannot contain more than the amount of water that corresponds with 100 percent saturation, and all the water over that amount must have been condensed. Such total condensation of the water is made possible by the fact that the water molecules can bind to or be taken up into the condenser liquid, which is the same fluid or the same compound, by cohesion.

In conventional air dryers having a high airflow (forced airflow generated by e.g. a fan), not all air (vapor) will be cooled to a temperature below the dew point. In these air dryers the yield is limited to the water molecules which the cold surface of the condenser has managed to bind during the relatively short time in which the air passes through the dryer. Conventional air dryers are designed to reduce the relative humidity in an enclosed space by repeatedly circulating the air through the dryer. This requires substantially more energy that the method and device of the invention. Moreover, the yield and the efficiency of conventional air dryers will decrease as the air in the enclosed space becomes dryer or if it becomes so warm that the condenser can no longer be maintained below the dew point temperature.

Although the invention has been illustrated by way of some exemplary embodiments, it will be clear that it is not limited to these embodiments. For instance, instead of water as condenser liquid and (ambient) air as vapor, other combinations of condenser liquid and vapor could be used in the method and device of the invention. It is even conceivable that aspects of the invention might be used when the condenser liquid and the vapor are not the same fluid or compound. In that case the condensate would be bound to the condenser liquid by adhesive rather than cohesive attraction. And rather than atomizing the condenser liquid to create a mist or shower, it could also be brought into heat exchanging contact with the vapor in the form of a liquid screen or a stream of liquid. Moreover, the structural features and design of the device can be varied in many ways. Consequently, the scope of the invention is defined solely by the annexed claims.

**Claims**

1. A method for condensing a vapor, comprising:

    - providing the vapor having a first dew point (1);
    - providing a condenser liquid (2), and cooling the condenser liquid to below or near the first dew point (3);
    - bringing the vapor and the condenser liquid into contact with each other (4), and thereby cooling the vapor to below or near the first dew point; and
    - causing the condenser liquid to flow and/or fall (5), thus causing a parallel flow of the vapor, such that the vapor is supplied and is cooled by contact with the condenser liquid, and wherein non-condensed vapor, which has a second dew point, is subsequently discharged (7);
    - further cooling the non-condensed vapor using a Peltier element after it has been in contact with the condenser liquid to below the second dew point (11);
    - precooling the vapor by bringing the vapor into heat exchanging contact with the further cooled, non-condensed vapor which has been in contact with the condenser liquid,

        wherein the vapor at least partially condenses into a condensate which is taken up by the condenser liquid and a secondary condensate is extracted from the non-condensed vapor, and wherein the condenser liquid is substantially the same fluid or compound as the vapor, and wherein

            - the vapor and the condenser liquid are brought into contact with each other within a housing (104);
            - the vapor is supplied via a vapor supply opening (105) in the housing (104);
            - the non-condensed vapor is discharged via a vapor discharge opening (106); and

    wherein

        - the condenser liquid with the condensate and secondary condensate taken up therein is collected (10,13).

2. The method of claim 1, wherein the condenser liquid is supplied by first supply means (102), which are provided closer to the vapor supply opening (105) than to the vapor discharge opening (106).

3. The method of claim 2, wherein the vapor supply opening (105) is provided downstream from the first supply means (102) as seen in a direction of movement of the condenser liquid, and wherein the condenser liquid is preferably caused to fall past the vapor supply opening (105) and/or the vapor discharge opening (106).

4. The method of any one of the preceding claims, further comprising atomizing the condenser liquid.

5. The method of any one of the preceding claims, further comprising:

    - generating electrical energy, preferably by converting solar energy, for cooling the condenser liquid and/or for causing the flow and/or fall the condenser liquid and/or for cooling the vapor, and wherein generating electrical energy preferably further comprises
    - storing at least part of the generated electrical energy by cooling a cold buffer (123) when enough electrical energy can be produced; and
    - cooling the condenser liquid and/or the vapor by means of the cold buffer (123) when not enough electrical energy can be produced.

6. The method of any one of the preceding claims, wherein the non-condensed vapor which has been in contact with the condenser liquid and which may have been cooled to below the second dew point is brought into heat exchanging contact with air in a space for cooling thereof.

7. The method of any one of the preceding claims, wherein the vapor is ambient air and the condensate is water.

8. A device (100) for condensing a vapor having a first dew point, comprising:

    - first cooling means (101) for cooling a condenser liquid to below or near the first dew point;
    - first supply means (102) for causing the condenser liquid to flow and/or fall such that the condenser liquid comes into contact with the vapor, whereby the vapor is cooled to below or near the first dew point;

- a housing (104) in which the first supply means are arranged, the housing having a vapor supply opening (105) for supplying the vapor and a vapor discharge opening (106) for discharging non-condensed vapor, and collecting means (107) for collecting the condenser liquid with a condensate taken up therein, where the first supply means are arranged such that the vapor is carried along by the flow of condenser liquid leaving from the first supply means;

- a pump (103) for pumping the condenser liquid to the first supply means;

- second cooling means (117) for cooling the non-condensed vapor, which has a second dew point after it has been in contact with the condenser liquid, to below the second dew point, wherein the second cooling means (117) include a Peltier element; and

- a heat exchanger (120) connected to the vapor supply opening and the vapor discharge opening for precooling the vapor by means of the non-condensed vapor which has been in contact with the condenser liquid and cooled to below the second dew point,

wherein the vapor at least partially condenses into the condensate which is taken up by the condenser liquid and a secondary condensate is extracted from the non-condensed vapor, and wherein the condenser liquid is substantially of the same fluid or compound as the vapor.

9. The device (100) of claim 8, wherein the first supply means (102) are arranged closer to the vapor supply opening (105) than to the vapor discharge opening (106).

10. The device (100) of claim 9, wherein the vapor supply opening (105) is arranged downstream from the first supply means (102) as seen in a direction of movement of the condenser liquid.

11. The device (100) of claim 10, wherein the first supply means (102) can cause the condenser liquid to fall past the vapor supply opening (105) and/or the vapor discharge opening (106).

12. The device (100) of claim 11, further comprising atomizing means for atomizing the condenser liquid.

13. The device (100) of any one of claims 8-12, further comprising generating means (128) for generating electrical energy, preferably one or more solar panels, which can supply electrical energy to the first cooling means (101), the second cooling means (117), the third cooling means and/or the pump (103).

14. The device (100) of claim 13, further comprising a cold buffer (123), wherein said cold buffer (123) is arranged for:

   - storing cold; and
   - supplying cold.

15. The device (100) of any one of claims 8-14, further comprising a heat exchanger arranged outside the housing (104) and connected to the vapor discharge opening (106) for cooling air in a space by means of the non-condensed vapor which has been in contact with the condenser liquid and which may have been cooled to below the second dew point, and/or liquid discharge means (109) arranged outside the housing for discharging the condenser liquid, the condensate, and the secondary condensate taken up therein outside the housing (104), and/or wherein the vapor supply opening (105) is adapted for supplying ambient air as the vapor and the reservoir (107) is adapted for use with water as the condensate.

**Patentansprüche**

1. Verfahren zum Kondensieren eines Dampfes, umfassend:

   - Bereitstellen des Dampfes mit einem ersten Taupunkt (1);
   - Bereitstellen einer Kondensatorflüssigkeit (2) und Kühlen der Kondensatorflüssigkeit unter den oder in die Nähe des ersten Taupunktes (3);
   - Bringen des Dampfes und der Kondensatorflüssigkeit miteinander in Kontakt (4) und dadurch Kühlen des Dampfes unter den oder in die Nähe des ersten Taupunktes; und
   - Veranlassen der Kondensatorflüssigkeit zu fließen und/oder zu fallen (5), um dadurch einen parallelen Fluss des Dampfes zu veranlassen, so dass der Dampf zugeführt wird und durch Kontakt mit der Kondensatorflüssigkeit gekühlt wird und wobei nicht kondensierter Dampf, der einen zweiten Taupunkt aufweist, anschließend abgeleitet wird (7);
   - weiteres Kühlen des nicht kondensierten Dampfes unter Verwendung eines Peltier-Elements, nachdem er in Kontakt mit der Kondensatorflüssigkeit gestanden hat, bis unter den zweiten Taupunkt (11);
   - Vorkühlen des Dampfes, indem der Dampf in Wärmeaustauschkontakt mit dem weiter gekühlten, nicht kondensierten Dampf gebracht wird, der in Kontakt mit der Kondensatorflüssigkeit gestanden hat,

wobei der Dampf zumindest teilweise in ein Kondensat kondensiert, das durch die Kondensatorflüssigkeit aufgenommen wird, und ein zweites Kondensat aus dem nicht kondensierten Dampf extrahiert wird, und wobei die Kondensatorflüssigkeit im Wesentlichen das gleiche Fluid oder Substanz wie der Dampf ist, und wobei

- der Dampf und die Kondensatorflüssigkeit in Kontakt miteinander in einem Gehäuses (104) gebracht werden;
- der Dampf über eine Dampfzuführöffnung (105) in das Gehäuse (104) zugeführt wird;
- der nicht kondensierte Dampf über eine Dampfauslassöffnung (106) abgeleitet wird; und

wobei

- die Kondensatorflüssigkeit mit dem Kondensat und zweiten Kondensat, das darin aufgenommen wurde, gesammelt wird (10, 13).

2. Verfahren nach Anspruch 1, wobei die Kondensatorflüssigkeit durch ein erstes Zuführmittel (102) zugeführt wird, das näher an der Dampfzuführöffnung (105) als an der Dampfauslassöffnung (106) bereitgestellt ist.

3. Verfahren nach Anspruch 2, wobei die Dampfzuführöffnung (105) stromabwärts von dem ersten Zuführmittel (102), gesehen in einer Richtung einer Bewegung der Kondensatorflüssigkeit, bereitgestellt ist, und wobei die Kondensatorflüssigkeit vorzugsweise veranlasst wird, an der Dampfzuführöffnung (105) und/oder der Dampfauslassöffnung (106) vorbeizufallen.

4. Verfahren nach einem der vorhergehenden Ansprüche, ferner umfassend ein Zerstäuben der Kondensatorflüssigkeit.

5. Verfahren nach einem der vorhergehenden Ansprüche, ferner umfassend:

- Erzeugen von elektrischer Energie, vorzugsweise durch Umwandlung von Sonnenenergie, zum Kühlen der Kondensatorflüssigkeit und/oder zum Veranlassen des Fließens und/oder des Fallens der Kondensatorflüssigkeit und/oder zum Kühlen des Dampfes, und wobei ein Erzeugen von elektrischer Energie vorzugsweise ferner umfasst

- Speichern mindestens eines Teils der erzeugten elektrischen Energie durch Kühlen eines Kältepuffers (123), wenn genügend elektrische Energie erzeugt werden kann; und
- Kühlen der Kondensatorflüssigkeit und/oder des Dampfes durch den Kältepuffer (123), wenn nicht genügend elektrische Energie erzeugt werden kann.

6. Verfahren nach einem der vorhergehenden Ansprüche, wobei der nicht kondensierte Dampf, der in Kontakt mit der Kondensatorflüssigkeit gestanden hat und der unter den zweiten Taupunkt gekühlt worden sein könnte, in Wärmeaustauschkontakt mit Luft in einem Raum zu deren Kühlung gebracht wird.

7. Verfahren nach einem der vorhergehenden Ansprüche, wobei der Dampf Umgebungsluft und das Kondensat Wasser ist.

8. Vorrichtung (100) zum Kondensieren eines Dampfes, der einen ersten Taupunkt aufweist, umfassend:

- ein erstes Kühlmittel (101) zum Kühlen einer Kondensatorflüssigkeit unter den oder in die Nähe des ersten Taupunktes;
- ein erstes Zuführmittel (102) zum Veranlassen der Kondensatorflüssigkeit zu fließen und/oder zu fallen, so dass die Kondensatorflüssigkeit in Kontakt mit dem Dampf kommt, wodurch der Dampf unter den oder in die Nähe des ersten Taupunktes gekühlt wird;
- ein Gehäuse (104), in dem das erste Zuführmittel angeordnet ist, wobei das Gehäuse eine Dampfzuführöffnung (105) zum Zuführen des Dampfes und eine Dampfauslassöffnung (106) zum Ableiten von nicht kondensiertem Dampf und ein Aufsammelmittel (107) zum Sammeln der Kondensatorflüssigkeit mit einem darin aufgenommenen Kondensat aufweist, wobei das erste Zuführmittel so angeordnet sind, dass der Dampf durch den Fluss der Kondensatorflüssigkeit, die aus dem ersten Zuführmittel austritt, mitgenommen wird;
- eine Pumpe (103) zum Pumpen der Kondensatorflüssigkeit zu dem ersten Zuführmittel;
- ein zweites Kühlmittel (117) zum Kühlen des nicht kondensierten Dampfes, der einen zweiten Taupunkt aufweist, nachdem er in Kontakt mit der Kondensatorflüssigkeit gestanden hat, unter den zweiten Taupunkt, wobei das zweite Kühlmittel (117) ein Peltier-Element umfasst; und
- einen Wärmetauscher (120), der mit der Dampfzuführöffnung und der Dampfauslassöffnung verbunden ist, um den Dampf durch den nicht kondensierten Dampf, der in Kontakt mit der Kondensatorflüssigkeit gestanden hat und unter den zweiten Taupunkt gekühlt wurde, vorzukühlen,

wobei der Dampf zumindest teilweise in das Kondensat kondensiert, das durch die Kondensatorflüssigkeit aufgenommen wurde, und ein zweites Kondensat aus dem nicht kondensierten Dampf extrahiert wird, und wobei die Kondensatorflüssigkeit im Wesentlichen das gleiche Fluid oder die gleiche Substanz wie der Dampf ist.

9. Vorrichtung (100) nach Anspruch 8, wobei das erste Zuführmittel (102) näher an der Dampfzuführöffnung (105) als an der Dampfauslassöffnung (106) angeordnet ist.

10. Vorrichtung (100) nach Anspruch 9, wobei die Dampfzuführöffnung (105) stromabwärts von dem ersten Zuführmittel (102), gesehen in einer Richtung einer Bewegung der Kondensatorflüssigkeit, angeordnet ist.

11. Vorrichtung (100) nach Anspruch 10, wobei das erste Zuführmittel (102) die Kondensatorflüssigkeit veranlasst an der Dampfzuführöffnung (105) und/oder der Dampfauslassöffnung (106) vorbeizufallen.

12. Vorrichtung (100) nach Anspruch 11, ferner umfassend ein Zerstäubungsmittel zum Zerstäuben der Kondensatorflüssigkeit.

13. Vorrichtung (100) nach einem der Ansprüche 8 bis 12, ferner umfassend ein Generatormittel (128) zum Erzeugen elektrischer Energie, vorzugsweise ein oder mehrere Solarzellen, das das erste Kühlmittel (101), das zweite Kühlmittel (117), das dritte Kühlmittel und/oder die Pumpe (103) mit elektrischer Energie versorgen kann.

14. Vorrichtung (100) nach Anspruch 13, ferner umfassend einen Kältepuffer (123), wobei der Kältepuffer (123) eingerichtet ist, zum:

   - Speichern von Kälte; und
   - Zuführen von Kälte.

15. Vorrichtung (100) nach einem der Ansprüche 8 bis 14, ferner umfassend einen Wärmetauscher, der außerhalb des Gehäuses (104) angeordnet und mit der Dampfauslassöffnung (106) verbunden ist, zum Kühlen von Luft in einem Raum mit dem nicht kondensierten Dampf, der in Kontakt mit der Kondensatorflüssigkeit gestanden hat und der unter den zweiten Taupunkt gekühlt worden sein könnte, und/oder ein Flüssigkeitsauslassmittel (109), das außerhalb des Gehäuses angeordnet ist, um die Kondensatorflüssigkeit, das Kondensat und das zweite Kondensat, das darin aufgenommen wurde, außerhalb des Gehäuses (104) auszulassen und/oder wobei die Dampfzuführöffnung (105) angepasst ist, Umgebungsluft als Dampf zuzuführen und das Reservoir (107) angepasst ist, mit Wasser als das Kondensat verwendet zu werden.

## Revendications

1. Procédé de condensation d'une vapeur, comprenant les étapes consistant à :

   - fournir la vapeur présentant un premier point de rosée (1) ;
   - fournir un liquide de condenseur (2), et refroidir le liquide de condenseur au-dessous ou près du premier point de rosée (3) ;
   - amener la vapeur et le liquide de condenseur en contact l'un avec l'autre (4), et refroidir ainsi la vapeur jusqu'au-dessous ou près du premier point de rosée ; et
   - provoquer l'écoulement et/ou la chute (5) du liquide du condenseur, en provoquant ainsi un écoulement parallèle de la vapeur, de telle sorte que la vapeur est fournie et est refroidie par contact avec le liquide de condenseur, et dans lequel la vapeur non condensée, qui présente un second point de rosée, est ensuite évacuée (7) ;
   - refroidir davantage la vapeur non condensée à l'aide d'un élément Peltier après qu'elle ait été en contact avec le liquide de condenseur jusqu'au-dessous du second point de rosée (11) ;
   - pré-refroidir la vapeur en mettant la vapeur en contact d'échange de chaleur avec la vapeur non condensée refroidie davantage qui a été en contact avec le liquide de condenseur, dans lequel la vapeur se condense au moins partiellement en un condensat qui est capturé par le liquide de condenseur et un condensat secondaire est extrait de la vapeur non condensée, et dans lequel le liquide de condenseur est sensiblement le même fluide ou substance que la vapeur, et dans lequel
   - la vapeur et le liquide de condenseur sont mis en contact l'un avec l'autre à l'intérieur d'un logement (104) ;
   - la vapeur est fournie via une ouverture d'alimentation en vapeur (105) dans le logement (104) ;
   - la vapeur non condensée est évacuée via une ouverture d'évacuation de vapeur (106) ; et dans lequel
   - le liquide de condenseur avec le condensat et le condensat secondaire capturé en son sein est recueilli (10, 13).

2. Procédé selon la revendication 1, dans lequel le liquide de condenseur est fourni par des premiers moyens d'alimentation (102), qui sont prévus plus près de l'ouverture d'alimentation en vapeur (105) que de l'ouverture d'évacuation de vapeur (106).

3. Procédé selon la revendication 2, dans lequel l'ouverture d'alimentation en vapeur (105) est prévue en aval des premiers moyens d'alimentation (102) en regardant dans une direction de déplacement du liquide de condenseur, et dans lequel le liquide de condenseur est de préférence amené à tomber au-delà de l'ouverture d'alimentation en vapeur (105) et/ou de l'ouverture d'évacuation de vapeur (106).

4. Procédé selon l'une quelconque des revendications précédentes, comprenant en outre l'atomisation du liquide de condenseur.

5. Procédé selon l'une quelconque des revendications précédentes, comprenant en outre les étapes consistant à :

   - générer une énergie électrique, de préférence par conversion d'énergie solaire, pour refroidir le liquide de condenseur et/ou pour provoquer l'écoulement et/ou la chute du liquide de condenseur et/ou pour refroidir la vapeur, et dans lequel la génération d'énergie électrique comprend en outre les étapes consistant à
   - stocker au moins une partie de l'énergie électrique générée en refroidissant un tampon froid (123) lorsque suffisamment d'énergie électrique peut être produite ; et
   - refroidir le liquide de condenseur et/ou la vapeur au moyen du tampon froid (123) lorsqu'il n'est pas possible de produire suffisamment d'énergie électrique.

6. Procédé selon l'une quelconque des revendications précédentes, dans lequel la vapeur non condensée qui a été en contact avec le liquide de condenseur et qui peut avoir été refroidie au-dessous du second point de rosée est amenée en contact d'échange de chaleur avec de l'air dans un espace pour son refroidissement.

7. Procédé selon l'une quelconque des revendications précédentes, dans lequel la vapeur est de l'air ambiant et le condensat est de l'eau.

8. Dispositif (100) pour condenser une vapeur présentant un premier point de rosée, comprenant :

   - des premiers moyens de refroidissement (101) pour refroidir un liquide de condenseur au-dessous ou près du premier point de rosée ;
   - des premiers moyens d'alimentation (102) pour amener le liquide de condenseur à s'écouler et/ou à tomber de telle sorte que le liquide de condenseur vienne en contact avec la vapeur, de telle manière que la vapeur est refroidie au-dessous ou près du premier point de rosée ;
   - un logement (104) dans lequel les premiers moyens d'alimentation sont agencés, le logement présentant une ouverture d'alimentation en vapeur (105) pour alimenter la vapeur et une ouverture d'évacuation de vapeur (106) pour évacuer la vapeur non condensée, et des moyens de collecte (107) pour collecter le liquide de condenseur avec un condensat capturé en son sein, où les premiers moyens d'alimentation sont agencés de telle sorte que la vapeur est transportée par l'écoulement de liquide de condenseur quittant les premiers moyens d'alimentation ;
   - une pompe (103) pour pomper le liquide de condenseur vers les premiers moyens d'alimentation ;
   - des seconds moyens de refroidissement (117) pour refroidir la vapeur non condensée, qui présente un second point de rosée après qu'elle ait été en contact avec le liquide de condenseur, jusqu'au-dessous du second point de rosée, dans lequel les seconds moyens de refroidissement (117) comprennent un élément Peltier ; et
   - un échangeur de chaleur (120) connecté à l'ouverture d'alimentation en vapeur et à l'ouverture d'évacuation de vapeur pour pré-refroidir la vapeur au moyen de la vapeur non condensée qui a été en contact avec le liquide du condenseur et refroidie jusqu'au-dessous du second point de rosée,

dans lequel la vapeur se condense au moins partiellement dans le condensat qui est capturé par le liquide de condensation et un condensat secondaire est extrait de la vapeur non condensée, et dans lequel le liquide de condensation est sensiblement le même fluide ou substance que la vapeur.

9. Dispositif (100) selon la revendication 8, dans lequel les premiers moyens d'alimentation (102) sont agencés plus près de l'ouverture d'alimentation en vapeur (105) que de l'ouverture d'évacuation de vapeur (106).

10. Dispositif (100) selon la revendication 9, dans lequel l'ouverture d'alimentation en vapeur (105) est agencée en aval des premiers moyens d'alimentation (102) en regardant dans une direction de déplacement du liquide de condenseur.

11. Dispositif (100) selon la revendication 10, dans lequel les premiers moyens d'alimentation (102) peuvent amener le liquide de condenseur à tomber au-delà de l'ouverture d'alimentation en vapeur (105) et/ou de l'ouverture d'évacuation de vapeur (106).

12. Dispositif (100) selon la revendication 11, comprenant en outre des moyens d'atomisation pour atomiser le liquide de condenseur.

13. Dispositif (100) selon l'une quelconque des revendications 8 à 12, comprenant en outre des moyens de génération (128) pour générer de l'énergie électrique, de préférence un ou plusieurs panneaux solaires, qui peuvent fournir de l'énergie électrique aux premiers moyens de refroidissement (101), aux deuxièmes moyens de refroidissement (117), aux troisièmes moyens de refroidissement et/ou à la pompe (103).

14. Dispositif (100) selon la revendication 13, comprenant en outre un tampon froid (123), dans lequel ledit tampon froid (123) est agencé pour :

   - stocker du froid ; et
   - fournir du froid.

15. Dispositif (100) selon l'une quelconque des revendications 8 à 14, comprenant en outre un échangeur de chaleur agencé à l'extérieur du logement (104) et connecté à l'ouverture d'évacuation de vapeur (106) pour refroidir de l'air dans un espace au moyen de la vapeur non condensée qui a été en contact avec le liquide de condenseur et qui peut avoir été refroidie jusqu'au-dessous du second point de rosée, et/ou des moyens d'évacuation de liquide (109) agencés à l'extérieur du logement pour évacuer le liquide de condenseur, le condensat et le condensat secondaire capturé en son sein à l'extérieur du logement (104), et/ou dans lequel l'ouverture d'alimentation en vapeur (105) est adaptée pour fournir de l'air ambiant en tant que vapeur et le réservoir (107) est adapté pour être utilisé avec de l'eau en tant que condensat.

FIG. 1

FIG. 2

## FIG. 3

## FIG. 4

## FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- BE 1009886 A5